# EUROPEAN PATENT SPECIFICATION

(11) **EP 4 082 842 B1**
(45) Date of publication and mention of the grant of the patent: **04.06.2025**
(21) Application number: 21171211.2
(22) Date of filing: 29.04.2021
(51) Int. Cl.: B60R 16/03, B60R 25/24

(54) **A METHOD FOR OPERATING A VEHICLE**
VERFAHREN ZUM BETRIEB EINES FAHRZEUGS
PROCÉDÉ DE FONCTIONNEMENT D'UN VÉHICULE

(43) Date of publication of application: 02.11.2022
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: LINDBERG NILSSON, Erik, 417 47 GÖTEBORG (SE); TRAN NGUYEN, Johnny, 421 34 GÖTEBORG (SE)
(74) Representative: Zacco Sweden AB

(56) References cited:
- EP-A1- 3 476 670
- EP-A2- 2 891 589
- US-A- 5 751 073
- US-A1- 2011 068 895
- US-A1- 2017 116 804
- US-A1- 2017 120 864
- US-A1- 2019 152 435

## Description

### TECHNICAL FIELD

The present disclosure relates to a method for operating a vehicle, where one or more key devices are associated with the vehicle. The one or more associated key devices are adapted for allowing a user of the vehicle to initiate a vehicle starting operation. The disclosure further relates to a computer program product comprising instructions which when the program is executed by a computer, cause the computer to carry out the method; a computer-readable medium comprising instructions which, when executed by a computer, cause the computer to carry out the method; a data processing system comprising means for carrying out the method; and a vehicle comprising a control system configured for executing the method steps.

### BACKGROUND

In today's vehicle systems, not only traditional keys or key fobs are used for operating the vehicle but also other devices, such as smartphones or other mobile devices that often are handled differently from traditional key fobs. These keys, key fobs, and other devices may together be defined as key devices, and the key devices may for example be used for opening the vehicle doors and for starting the vehicles. If the vehicle has a system for keyless operation, the functions of the vehicle may be remotely controlled by the key device, and a starting operation is allowed when the key device is present in an interior compartment of the vehicle, or in close connection to the interior compartment. When starting the vehicle, the key device is thus needed for the vehicle systems to allow a vehicle starting operation. However, once the vehicle is started, it is usually possible to drive away with the vehicle without the key device present in the vehicle. Therefore, there is a risk that the started vehicle is operated without a key device present, which makes it impossible to start the vehicle again when the vehicle has been shut off. Thus, the users of the vehicle will not have the possibility to start the vehicle again, since the key device is missing.

There is thus a need for an improved way of operating a vehicle when the key device is missing.

Patent publication US 5,751,073 A discloses a vehicle system for passive keyless entry and passive engine starting. The vehicle has a detector for detecting the presence of a valid radio frequency transmitter only within a seating space inside the vehicle. Start control circuitry is responsive to a RUN signal, if the detector has detected the presence of a valid radio frequency transmitter within the seating space. Engine deactivation occurs responsive to an OFF signal during engine operation to deactivate the engine electric power circuit and activate the detector.

### SUMMARY

An object of the present disclosure is to provide: a method for operating a vehicle; a computer program product comprising instructions which when the program is executed by a computer, cause the computer to carry out the method; a computer-readable medium comprising instructions which, when executed by a computer, cause the computer to carry out the method; a data processing system comprising means for carrying out the method; and a vehicle comprising a control system configured for executing the method steps where the previously mentioned problems are avoided. This object is at least partly achieved by the features of the independent claims. The dependent claims contain further developments of the method for operating a vehicle.

The disclosure concerns a method for operating a vehicle, where one or more key devices are associated with the vehicle. The one or more associated key devices are adapted for allowing a user of the vehicle to initiate a vehicle starting operation. The method comprises the steps: initiating a vehicle shut-off sequence after initiation of the vehicle starting operation, where the vehicle shut-off sequence is initiated upon receipt of a shut-off request, where the vehicle shut-off sequence comprises a searching operation for detecting associated key devices within a boundary of the vehicle; and controlling the vehicle to entering a conditional operation mode when detecting that no associated key devices are within the boundary, wherein the conditional operation mode is authorizing a pre-determined vehicle activity preventing a non-operational state of the vehicle.

Advantages with these features are that the pre-determined vehicle activity could be determined to involve an activity where a user of the vehicle may utilize functions of the vehicle even though a key device is missing. The pre-determined vehicle activity is preventing the vehicle to enter a non-operational state in which the vehicle could not be used. If the vehicle is started and then operated without a key device present, the pre-determined vehicle activity is allowing specific use of the vehicle after initiation of a shut-off sequence. In this way, it is ensured that if a user drives away with the vehicle without the key device present in the vehicle, the vehicle could still be operated even if the shut-off sequence is initiated by the user. In this way, the operation of the vehicle is improved, even when the key device is missing.

According to an aspect of the disclosure, the conditional operation mode comprises a charging operation of at least one of the one or more associated key devices via a charging port of the vehicle. The method further comprises the step: providing a charging current to the charging port after execution of the vehicle shut-off sequence. The charging operation is allowing a user to charge the key device if the key device has been automatically switched off due to low battery level. The key device can be plugged in to the charging port for the charging operation. The charging operation is thus enabling use of the key device, once the key device is charged and turned on. The vehicle is able to detect the charged key device, and a starting operation of the vehicle is allowed.

According to another aspect of the disclosure, the method further comprises the steps: detecting associated key devices within the boundary of the vehicle and storing the identity of detected associated key devices in a memory unit before initiation of the vehicle starting operation, and enabling a charging operation of at least one of the associated key devices stored in the memory unit. With this function, unauthorized use of the vehicle can be prevented. If only stored associated key devices are allowed for charging, no other key devices could be used for operating the vehicle.

According to an aspect of the disclosure, the conditional operation mode comprises an initiation of a vehicle re-starting operation allowing the user to re-start the vehicle. The method further comprises the steps: enabling the vehicle re-starting operation after execution of the vehicle shut-off sequence, and re-starting the vehicle by initiating the vehicle starting operation upon receiving a starting request. This conditional operation mode is allowing a re-starting of the vehicle even if the key device is missing upon a starting request, for example from the user of the vehicle. Thus, the users of the vehicle will have the possibility to start the vehicle again, and the conditional operation mode is preventing that the user is not allowed to operate the vehicle due to a missing key device.

According to another aspect of the disclosure, the vehicle re-starting operation is enabling a limited vehicle driving operation. The method further comprises the step: driving the vehicle by the user to a pre-determined destination. This step is preventing that the vehicle is driven to any location, for a more secure operation of the vehicle and for preventing unauthorized use of the vehicle.

According to a further aspect of the disclosure, the pre-determined destination comprises one or more destinations associated with one or more users of the vehicle. The method further comprises the step: driving the vehicle to one of the one or more destinations associated with the one or more users. In this way, the security of the system is further improved. Allowed destinations must be pre-determined, and for example stored in a control system of the vehicle. A destination associated with the user may for example be a home address or a work address.

According to an aspect of the disclosure, the pre-determined destination comprises one or more locations of one of the one or more associated key devices. The method further comprises the step: driving the vehicle to one of the one or more locations of the one or more associated key devices. With this configuration, the vehicle can be driven to an associated key device. If for example one user carrying the key device has left the vehicle, another user can drive the vehicle to the location of the user carrying the key device. The limited vehicle driving operation to the pre-determined destination may further be useful for example if the associated key device by mistake is placed on the exterior of the vehicle within the boundary, and falls off the vehicle when the user is driving away. When the user discovers that the key device is missing, the limited driving operation to the pre-determined destination where the associated key device is located allows the user to drive back to the key device.

According to another aspect of the disclosure, the one or more destinations associated with the one or more users and/or the one or more locations of the one or more associated key devices are stored in a navigation system of the vehicle. The method further comprises the step: providing one or more navigation routes to each of the one or more destinations associated with the one or more users and/or the one or more locations of the one or more associated key devices by the navigation system. The navigation system is simplifying the navigation to the destination or location, for an easy and simple solution. The user of the vehicle may select a suitable navigation route for convenient access to a destination or a location.

According to a further aspect of the disclosure, the method further comprises the step: initiate a vehicle warning action if the vehicle is deviating from the one or more navigation routes provided by the navigation system. The warning action is preventing unauthorized use of the vehicle. The vehicle warning action may include a visual warning or an audible warning indicating to the driver that the vehicle is deviating from the navigation route. Other vehicle warning actions may include a vehicle stopping activity preventing the user to drive the vehicle. The vehicle stopping activity may be preceded by a visual or audible warning.

According to an aspect of the disclosure, the conditional operation mode comprises a key sharing request. The method further comprises the steps: requesting key sharing from one of the one or more associated key devices outside of the boundary of the vehicle; upon confirmation of the key sharing request enabling the vehicle re-starting operation after execution of the vehicle shut-off sequence; and re-starting the vehicle by initiating the vehicle starting operation upon receiving a starting request. The key sharing request is authorizing information sharing from an authorized key device to another key device. The sharing key device may for example be an authorized key device, such as a smartphone, located outside the boundary of the vehicle, which is sharing the necessary information to a key device, such as a smartphone located within the boundary of the vehicle. The smartphone within the boundary is then receiving necessary identity information from the smartphone outside the boundary for allowing operation of the vehicle.

According to another aspect of the disclosure, the method further comprises the step: associate specific users with the vehicle, and/or associate specific users with the one or more key devices. This is preventing unauthorized use of the vehicle, where only specific users may operate the vehicle. The identity of the users may be stored in the control system of the vehicle.

According to a further aspect of the disclosure, the vehicle comprises a user identification sensor. The method further comprises the step: detecting and identifying specific associated users inside the vehicle with the user identification sensor, and upon detection and identification of at least one specific associated user enabling the conditional operation mode. The user identification sensor may suitably be a camera sensor using biometric information for identifying users, a fingerprint sensor, an eye detection sensor, or other suitable user identification sensors. This step including detection and identification of specific associated users inside the vehicle with the user identification sensor, may be used for enabling the conditional operation mode only upon detection and identification of at least one specific associated user, preventing theft or unauthorized use of the vehicle.

According to an aspect of the disclosure, the method further comprises the steps: enabling the conditional operation mode during a limited time period. This is preventing that the user is waiting too long for acting upon the conditional operation modes provided. The time period may be different for different types of conditional operation modes, and may vary depending on the distance to the key device or the travel time to the key device.

According to another aspect of the disclosure, the vehicle comprises one or more key detection sensors. The method further comprises the step: detecting associated key devices within the boundary with the one or more key detection sensors. Any type of sensor suitable for detecting key devices may be used.

According to a further aspect of the disclosure, the one or more key detection sensors are wireless communication sensors enabling communication between associated key devices and the vehicle.

According to an aspect of the disclosure, the method further comprises the step: initiating the vehicle starting operation upon receiving a starting request when at least one of the one or more associated key devices is detected within the boundary. The starting request is suitably initiated by the user through for example pushing or turning a start/stop button or similar device arranged in an interior compartment of the vehicle, or alternatively initiated via a smartphone or activation of a NFC tag. The vehicle starting operation is thus initiated upon receiving a starting request, such as the pushing or turning a start/stop button or similar device, when at least one of the one or more associated key devices is detected within the boundary.

The disclosure further concerns: a computer program product comprising instructions which when the program is executed by a computer, cause the computer to carry out the method; a computer-readable medium comprising instructions which, when executed by a computer, cause the computer to carry out the method; a data processing system comprising means for carrying out the method; and a vehicle comprising a control system configured for executing the method steps.

### BRIEF DESCRIPTION OF DRAWINGS

The disclosure will be described in detail in the following, with reference to the attached drawings, in which
- Fig. 1: shows schematically, is a perspective view, a vehicle and a user of the vehicle holding a key device associated with the vehicle, according to the disclosure,
- Fig. 2: shows schematically, in a perspective view, an interior compartment of the vehicle with the key device arranged within the interior compartment, according to the disclosure,
- Fig. 3: shows schematically, a flowchart of exemplified method steps for operation of the vehicle, according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

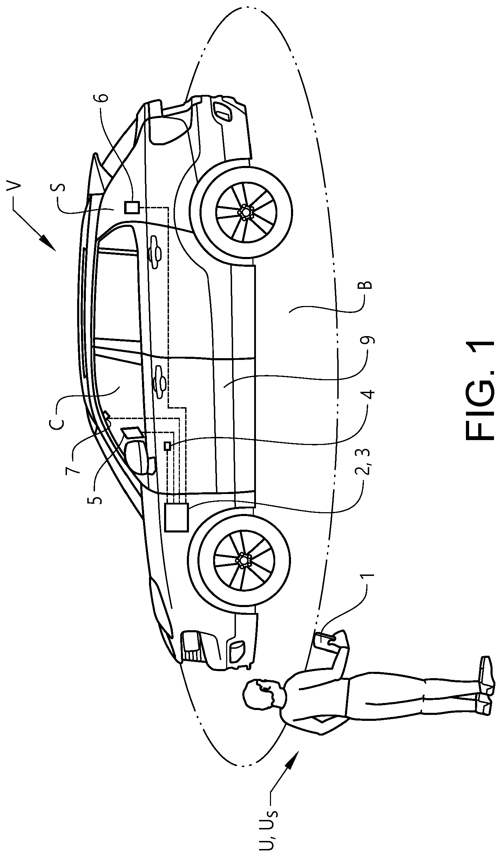

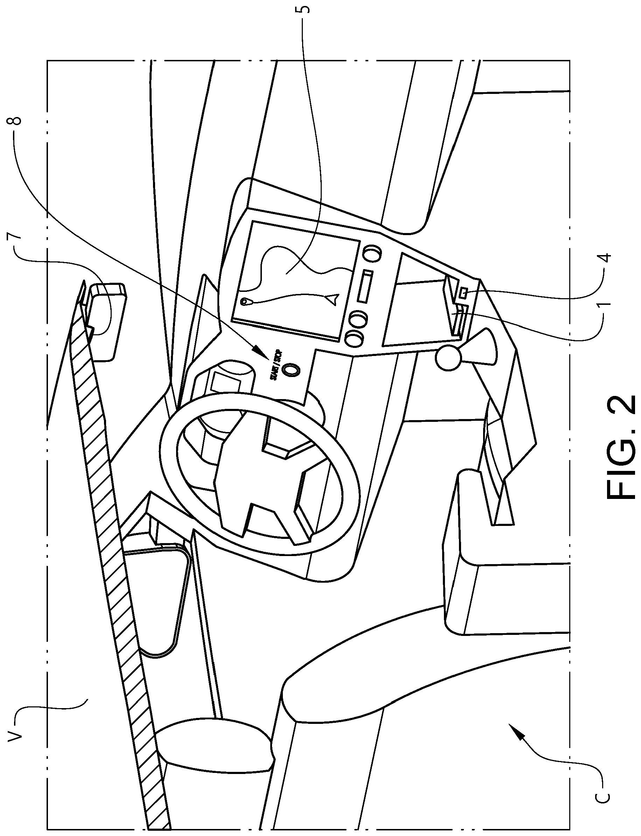

Figure 1 schematically shows a vehicle V and a user U of the vehicle holding a key device 1 associated with the vehicle V. The user U may for example open the doors of the vehicle by operating the key device 1, and the vehicle is configured for detecting associated key devices 1 within a boundary B of the vehicle. The detection of associated key devices 1 is for example used for allowing a vehicle starting operation V_{ST}, and if the vehicle V is detecting an associated key device 1 within the boundary B the user U may initiate the vehicle starting operation V_{ST}. In figure 1, the associated key device 1 is positioned outside the boundary B and initiation of the vehicle starting operation V_{ST} is prevented. In figure 2, the key device 1 is positioned in the interior compartment C within the boundary B and initiation of the vehicle starting operation V_{ST} is allowed. It should however be understood that doors 9 of the vehicle may be locked or unlocked by operating the key device 1 outside the boundary B, and other vehicle functions may also be operated by the key device 1 outside the boundary B.

The key device 1 may be any type of suitable device for operating the vehicle V, and examples of key devices 1 are key fobs, near field communication tags (NFC) and other key tags, smartphones and other portable devices that could be used for operating the vehicle V. With an associated key device 1 is meant a key device 1 that is paired with or connected to the vehicle V, and only associated key devices 1 could be used for operating the vehicle V. The vehicle systems are designed to prevent unauthorized use of the vehicle V by not allowing non-associated key devices to operate the vehicle V. The key device 1 is for example paired with the vehicle V or connected to the vehicle V through a programming operation or similar activity for storing the identity of the key device 1 in a memory unit 3 of a control system 2 of the vehicle V. One or more key devices 1 may be associated with the vehicle V and stored in the memory unit 3. In this way, one or more key devices 1 could be used for operating the vehicle V, for example by different users U of the vehicle V. The identity of detected associated key devices 1 within the boundary B of the vehicle could also be identified and stored in the memory unit 3 before the initiation of the vehicle starting operation V_{ST}, and in this way, the control system 2 knows the specific key device 1 or key devices 1 being positioned within the boundary B before the initiation of the vehicle starting operation V_{ST}.

The boundary B is defined as a specific boundary in connection to the vehicle, in which the associated key devices 1 can be detected by the systems of the vehicle V for allowing the starting operation V_{ST} of the vehicle V. It should be understood that the boundary B could differ between different vehicle types. In the embodiment illustrated in figure 1, the boundary B is including an interior compartment C of the vehicle V and a specific space surrounding the vehicle V. The boundary B may for example be determined by the sensors used in the vehicle V for detecting associated key devices. In other embodiments, the boundary B may be only the interior compartment C of the vehicle V, or alternatively a specific defined area or space of the interior compartment C.

In the following, a method for operating the vehicle V will be described more in detail. One or more key devices 1 are associated with the vehicle V, and the one or more associated key devices 1 are adapted for allowing a user U of the vehicle V to initiate the vehicle starting operation V_{ST}. The vehicle V is provided with one or more key detection sensors 6 that are detecting associated key devices 1 within the boundary B of the vehicle V. The one or more key detection sensors 6 may be positioned at different locations of the vehicle, such as for example in connection to the interior compartment C and/or in connection to the exterior surface S of the vehicle V. In figure 1, one key detection sensor 6 is shown for illustrative purposes. The one or more key detection sensors 6 are suitably wireless communication sensors enabling communication between associated key devices 1 and the vehicle V. Any type of sensor suitable for detecting key devices may be used, such as for example well-known standard sensors used today.

With a vehicle starting operation V_{ST} is meant an operation where the vehicle V is arranged into a state ready for driving away by the user U or by an autonomous system of the vehicle V. If the vehicle is equipped with an internal combustion engine, the vehicle starting operation V_{ST} may include a start-up sequence of the engine and initiation of vehicle systems needed for the driving away operation. If the vehicle is equipped with one or more electric motors, the vehicle starting operation V_{ST} may include power supply to the one or more electric motors and initiation of vehicle systems needed for the driving away operation. For hybrid vehicles equipped with both an internal combustion engine and one or more electric motors, the vehicle starting operation V_{ST} may include a start-up sequence of the engine and/or power supply to the one or more electric motors as well as initiation of vehicle systems needed for the driving away operation. The vehicle starting operation V_{ST} may be initiated by the user U for example through pushing or turning a start/stop button 8 or similar device arranged in the interior compartment C of the vehicle V, or alternatively initiated via a smartphone or activation of a NFC tag. The vehicle starting operation V_{ST} is thus initiated upon receiving a starting request, such as the pushing or turning a start/stop button 8 or similar device, when at least one of the one or more associated key devices 1 is detected within the boundary B.

Normal handling of the vehicle V includes a vehicle unlocking operation, where doors 9 of the vehicle are being arranged in an unlocked state from a locked state. In the unlocked state, the user U can open one or more of the doors 9 of the vehicle V. In the locked state, the user U or other persons are prevented from opening the doors 9. The user may use the key device 1 for remotely changing the state of the vehicle V between the locked state and the unlocked state. The vehicle V has a non-operational state before the vehicle starting operation V_{ST} is initiated, and the non-operational state is defined as a state where it is not possible to drive away with the vehicle V. The vehicle V may have the non-operational state in the locked state, and in the unlocked state before the vehicle starting operation V_{ST} is initiated. In the non-operational state, one or more vehicle systems may be in a sleep mode, preventing high power consumption. When the vehicle starting operation V_{ST} is completed and the vehicle V is in a state ready for driving away, a vehicle shut-off sequence V_{SO} could be initiated.

In traditional vehicle applications, the vehicle shut-off sequence V_{SO} is usually initiated by the user U by for example pushing or turning the start/stop button 8, and when initiating the vehicle shut-off sequence V_{SO} the vehicle V is entering the non-operational state, preventing the user to drive away with the vehicle unless a vehicle starting operation V_{ST} has been initiated again.

According to the method, the vehicle shut-off sequence V_{SO} is initiated any time after initiation of the vehicle starting operation V_{ST}, and the vehicle shut-off sequence V_{SO} is initiated upon receipt of a shut-off request. The shut-off request may be initiated by the user U through for example pushing or turning the start/stop button 8, or alternatively initiated via a smartphone or activation of a NFC tag. The vehicle shut-off sequence V_{SO} comprises a searching operation for detecting associated key devices 1 within the boundary B of the vehicle V. Thus, when a shut-off request has been received by the control system 2, the searching operation for associated key devices 1 within the boundary B is started. If the searching operation is detecting one or more associated key devices 1 within the boundary B, the vehicle V is allowed to enter the non-operational state. In figure 2, the associated key device 1 is positioned within the boundary B in the interior compartment C, and the key device 1 may be detected by the vehicle V. However, if the searching operation is detecting that no associated key devices 1 are within the boundary B of the vehicle V, the vehicle shut-off sequence V_{SO} is controlling the vehicle V to entering a conditional operation mode M_{CO}. Thus, the vehicle shut-off sequence V_{SO} is not allowing the vehicle V to entering the non-operational state, but instead controlling the vehicle V to entering the conditional operation mode M_{CO} when detecting that no associated key devices 1 are within the boundary B, as illustrated in figure 1 where the user U holding the key device 1 is outside the boundary B.

The conditional operation mode M_{CO} is authorizing a pre-determined vehicle activity preventing the non-operational state of the vehicle V, and the conditional operation mode M_{CO} is used for allowing specific vehicle activities different from a traditional vehicle shut-off sequence V_{SO}. The conditional operation mode M_{CO} is entered when detecting that no associated key devices 1 are within the boundary B, which may be the case if a user has left the vehicle with the key device 1 after initiation of the starting operation V_{ST}, and another user continued driving the vehicle without the key device 1 present.

In certain embodiments, the conditional operation mode M_{CO} comprises a charging operation O_{CH} of at least one of the one or more associated key devices 1 via a charging port 4 of the vehicle V. The charging operation O_{CH} is suitably controlled by the control system 2, and a charging current is provided to the charging port 4 after execution of the vehicle shut-off sequence V_{SO}. This embodiment is convenient for example if the key device 1 is a smartphone used for starting the vehicle V that is later running out of battery, and therefore not possible to detect within the boundary B. The conditional operation mode M_{CO} is then allowing the smartphone to be charged. The charging operation may be limited and controlled by the control system 2 to include only specific key devices 1. This conditional operation mode M_{CO} could alternatively enable a charging operation O_{CH} of at least one of the associated key devices 1 stored in the memory unit 3, where the identity of one or more detected associated key devices 1 within the boundary B earlier were stored in the memory unit 3 before initiation of the vehicle starting operation V_{ST}.

In certain embodiments, the conditional operation mode M_{CO} comprises an initiation of a vehicle re-starting operation V_{RE}. The vehicle re-starting operation V_{RE} is allowing the user U to re-start the vehicle V, and the vehicle re-starting operation V_{RE} is enabled after execution of the vehicle shut-off sequence V_{SO}, when detecting that no associated key devices 1 are within the boundary B. The re-starting of the vehicle V is enabled by initiating the vehicle starting operation V_{ST} upon receiving a starting request, and the vehicle starting operation V_{ST} may be initiated by the user U for example through pushing or turning the start/stop button 8 or similar device arranged in the interior compartment C of the vehicle V as the starting request.

In certain embodiments, the vehicle re-starting operation V_{RE} is allowing a limited vehicle driving operation, where the vehicle V can be driven by the user U to a pre-determined destination. The pre-determined destination comprises one or more destinations associated with one or more users U of the vehicle V, and in the conditional operation mode M_{CO}, the vehicle V can only be driven to one of the one or more destinations associated with the one or more users U. Examples of destinations associated with the user U may for example be a home address, a work address, or other address associated to the user. The destinations associated with the user U are suitably pre-stored in the control system 2. With this conditional operation mode M_{CO}, the user U is allowed to drive the vehicle to the pre-determined destination for a safe operation of the vehicle V.

In certain embodiments, the pre-determined destination comprises one or more locations of one of the one or more associated key devices 1, where the vehicle V can be driven to one of the one or more locations of the one or more associated key devices 1. This conditional operation mode M_{CO} is allowing a driving activity to the location of an associated key device 1, where the key device can be picked-up by the user of the vehicle V.

In certain embodiments, the one or more destinations associated with the one or more users U and/or the one or more locations of the one or more associated key devices 1 are stored in a navigation system 5 of the vehicle V. The navigation system 5 is when the conditional operation mode M_{CO} is entered providing one or more navigation routes to each of the one or more destinations associated with the one or more users U and/or the one or more locations of the one or more associated key devices 1 by the navigation system 5. The user U may then select a suitable navigation route in the navigation system 5 for driving the vehicle V to a destination associated with one or more users U or to a location of the one or more associated key devices 1. If the vehicle is deviating from the one or more navigation routes provided by the navigation system 5 a vehicle warning action is initiated. The vehicle warning action is suitably initiated by the control system 2 of the vehicle V, and the vehicle warning action may include a visual warning or an audible warning indicating to the driver that the vehicle V is deviating from the navigation route. Other vehicle warning actions may include a vehicle stopping activity preventing the user to drive the vehicle. The vehicle stopping activity may be preceded by a visual or audible warning, and the user may be given a specific time duration or distance to return to the navigation route. For vehicles having autonomous drive systems, the vehicle may take control of the vehicle for returning the vehicle to the navigation route.

In certain embodiments, the conditional operation mode M_{CO} comprises a key sharing request R_{KS}, where key sharing is requested from one of the one or more associated key devices outside of the boundary B of the vehicle V. The vehicle re-starting operation V_{RE} is enabled after execution of the vehicle shut-off sequence V_{SO} upon confirmation of the key sharing request R_{KS}. The key sharing includes authorizing another suitable key device 1 from an associated key device 1, where the suitable key device 1 is located within the boundary B of the vehicle V. The associated key device 1 may for example be a smartphone located outside the boundary B of the vehicle V, which is sharing the necessary key sharing information to a smartphone located within the boundary B. The smartphone within the boundary B is then sharing the identity of the smartphone outside the boundary B for allowing operation of the vehicle V, and the smartphone within the boundary B is detected and identified by the control system 2. The smartphones may suitably have apps that are communicating for allowing the key sharing and the identity of users U involved may need to be authorized before allowing key sharing. The vehicle V is re-started by initiating the vehicle starting operation V_{ST} upon receiving a starting request. The vehicle starting operation V_{ST} may be initiated by the user U for example through pushing or turning the start/stop button 8 or similar device arranged in the interior compartment C of the vehicle V as the starting request.

To initiate the conditional operation mode M_{CO} comprising the key sharing request R_{KS}, the control system 2 of the vehicle V may be configured to search for and detect any types of detectable devices that may function as a key device within the boundary B of the vehicle V. The detectable devices could for example be smartphones or other mobile devices that are not associated to the vehicle V but are located within the boundary B, and that may function as a key device. If the control system 2 when entering the conditional operation mode M_{CO} is detecting such a device that is not associated with the vehicle V, the control system 2 may authorize the detected device to send a key sharing request R_{KS} in the form of a booking request to one of the associated key devices 1 located outside the boundary B of the vehicle V. Alternatively, the vehicle V may instead send the booking request to one of the associated key devices 1 located outside the boundary B of the vehicle V. When an associated key device 1 located outside the boundary B of the vehicle V is receiving such a booking request, a user U in possession of the associated key device 1 may confirm and authorize the booking request. Upon confirmation of the booking request, the device within the boundary B of the vehicle will be fully authorized or partly authorized by the user U in possession of the associated key device 1 for allowing operation of the vehicle V, in the same way as for an associated key device 1. Thus, the associated key device 1 located outside the boundary B of the vehicle V is sharing necessary information to the detected device within the boundary B for allowing operation of the vehicle V. A fully authorized device will have the same functionality as an associated key device 1. A partly authorized device may have limited functions, and for example only allowing a limited number of vehicle starting operations V_{ST}, only allowing vehicle starting operations V_{ST} during a limited time period, or only allow a limited driving operation.

As an example, the key sharing possibility is useful if a first user U in possession of an associated key device 1, such as for example a smartphone, is leaving the vehicle V with the associated key device 1, and another user U in the vehicle V thereafter is initiating a vehicle shut-off sequence V_{SO}. The vehicle is then in the vehicle shut-off sequence V_{SO} searching for associated key devices 1, and when no associated key devices 1 are detected within the boundary B of the vehicle V, the key sharing conditional operation mode M_{CO} may be initiated by the control system 2. The control system 2 is then searching for other detectable devices that may function as a key device and upon detection of such other device within the boundary B, the control system 2 may authorize the detected device to send a key sharing request R_{KS} in the form of a booking request to the associated key device 1. The detected device may for example be a non-associated smartphone of the other user U that is located within the boundary B of the vehicle V, and this detected smartphone of the other user U is sending a booking request to the associated key device 1, such as the above-exemplified smartphone of the first user U that has left the vehicle V. Upon receipt of the booking request, the first user U may fully authorize or partly authorize the smartphone of the other user U that is located within the boundary B of the vehicle V. The other user U may then start the vehicle and drive away with the vehicle V. In this case, a partly authorization may as an example include a driving operation only to the associated key device 1 of the first user U. In another similar scenario, if the other user U is driving away with the vehicle V, and later is initiating the vehicle shut-off sequence V_{SO} the key sharing conditional operation mode M_{CO} may be initiated by the control system 2 as described in the example above. However, the booking request may also include a possibility for the other user U to leave and lock the vehicle V for a certain time period and later unlock and re-start the vehicle V again via the smartphone of the other user U, upon authorization by the first user U through the associated key device 1 outside the boundary B.

The conditional operation mode M_{CO} comprising the key sharing request R_{KS}, including the search for and detection of any types of detectable devices that may function as a key device within the boundary B of the vehicle V is further preventing vehicle theft or unauthorized use of the vehicle V, since the control system 2 is verifying that the detectable key device actually is located within the boundary B of the vehicle. This is different from other conventional key sharing solutions using text messages or phone calls via smartphone applications that are not confirming the presence within the boundary B, and such conventional solutions may be more difficult to prevent from hacking.

In certain embodiments, specific users U_{S} are associated with the vehicle V, and/or specific users U_{S} are associated with the one or more key devices 1. The association of specific users U_{S} may be accomplished with user identification systems or by storing the identity of the user, or a user profile, in the control system 2. With this arrangement, only specific users U_{S} are allowed to operate the vehicle V in the conditional operation mode M_{CO}. The vehicle V may comprise a user identification sensor 7, where specific associated users U_{S} are detected and identified inside the vehicle V with the user identification sensor 7. Upon detection and identification of at least one specific associated user U_{S} the conditional operation mode M_{CO} is enabled. The user identification sensor 7 may for example be a camera sensor using biometric information for identifying users U, a fingerprint sensor, an eye detection sensor, or other suitable user identification sensors 7. With this configuration, where detection and identification of specific associated users U_{S} inside the vehicle V with the user identification sensor 7 is included, the conditional operation mode M_{CO} may be enabled only upon identification of at least one specific associated user U_{S} inside the vehicle V, which is preventing theft or unauthorized use of the vehicle V.

In certain embodiments, the conditional operation mode M_{CO} is enabled during a limited time period. This is preventing that the user U is waiting too long for acting upon the conditional operation modes M_{CO} provided. The time period may be different for different types of conditional operation modes.

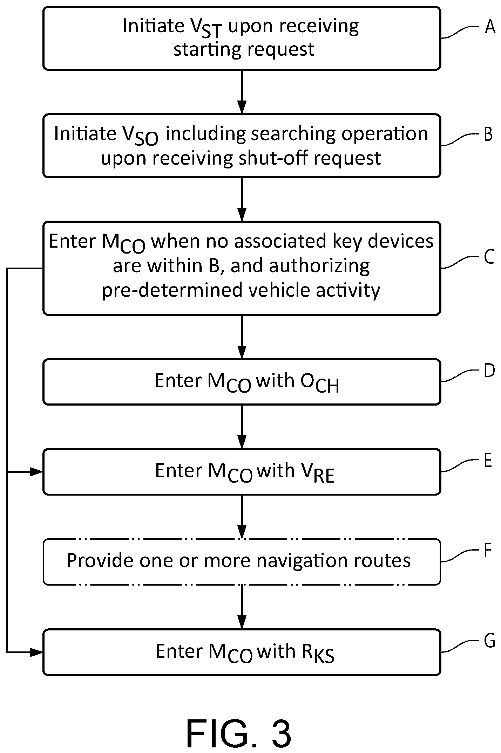

A flowchart of an exemplified method for operating the vehicle is shown in figure 3. The exemplified method comprises the steps described below with reference to figure 3.

In step A, the vehicle starting operation V_{ST} is initiated upon receiving a starting request.

In step B, the vehicle shut-off sequence V_{SO} is initiated upon receiving a shut-off request, where the vehicle shut-off sequence V_{SO} comprises a searching operation for detecting associated key devices 1 within a boundary B of the vehicle V.

In step C, the vehicle V is controlled to enter a conditional operation mode M_{CO}, when detecting that no associated key devices 1 are within the boundary B. The conditional operation mode M_{CO} is authorizing a pre-determined vehicle activity preventing a non-operational state of the vehicle V.

In step D, the conditional operation mode M_{CO} comprises a charging operation O_{CH} of at least one of one or more associated key devices 1 via a charging port 4 of the vehicle V, where a charging current is provided to the charging port 4 after execution of the vehicle shut-off sequence V_{SO}. In this step, the charging operation O_{CH} could be enabled for at least one of the associated key devices 1 stored in the memory unit 3. In this step, the conditional operation mode M_{CO} could be enabled during a limited time period. This step could also include detection and identification of specific associated users U_{S} inside the vehicle V with the user identification sensor 7, and the conditional operation mode M_{CO} is only enabled upon detection and identification of at least one specific associated user U_{S}.

In step E, the conditional operation mode M_{CO} comprises an initiation of a vehicle re-starting operation V_{RE} allowing the user U to re-start the vehicle V. The vehicle re-starting operation V_{RE} is enabled after execution of the vehicle shut-off sequence V_{SO}, and the vehicle V is re-started by initiating the vehicle starting operation V_{ST} upon receiving a starting request. In this step, the vehicle re-starting operation V_{RE} could be enabled only for a limited vehicle driving operation, where the user U is allowed to drive the vehicle V to a pre-determined destination, as described above. In this step, the conditional operation mode M_{CO} could be enabled during a limited time period. This step could further include detection and identification of specific associated users U_{S} inside the vehicle V with the user identification sensor 7, and the conditional operation mode M_{CO} is only enabled upon detection and identification of at least one specific associated user U_{S}.

In step F, one or more navigation routes are optionally provided to each of one or more destinations associated with the one or more users U and/or one or more locations of the one or more associated key devices 1 by the navigation system 5. In this step, a vehicle warning action could be initiated if the vehicle is deviating from the one or more navigation routes provided by the navigation system 5.

In step G, the conditional operation mode M_{CO} comprises a key sharing request R_{KS}, where key sharing is requested from one of the one or more associated key devices outside of the boundary B of the vehicle V. Upon confirmation of the key sharing request R_{KS} the vehicle re-starting operation V_{RE} is enabled after execution of the vehicle shut-off sequence V_{SO}, and the vehicle V is re-started by initiating the vehicle starting operation V_{ST} upon receiving a starting request. In this step, the conditional operation mode M_{CO} could be enabled during a limited time period. This step could further include detection and identification of specific associated users U_{S} inside the vehicle V with the user identification sensor 7, and the conditional operation mode M_{CO} is only enabled upon detection and identification of at least one specific associated user U_{S}.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the control system, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processor or processors associated with the control system may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Key device
- 2:: Control system
- 3:: Memory unit
- 4:: Charging port
- 5:: Navigation system
- 6:: Key detection sensors
- 7:: User identification sensor
- 8:: Start/stop button
- 9:: Door

- B:: Boundary
- C:: Interior compartment
- M_{CO}:: Conditional operation mode
- O_{CH}:: Charging operation
- V_{RE}:: Vehicle re-starting operation
- R_{KS}:: Key sharing request
- S:: Exterior surface
- U:: User
- U_{S}:: Specific associated user
- V:: Vehicle
- V_{RE}:: Vehicle re-starting operation
- V_{SO}:: Vehicle shut-off sequence
- V_{ST}:: Vehicle starting operation

## Claims

1. A method for operating a vehicle (V), wherein one or more key devices (1) are associated with the vehicle (V), wherein the one or more associated key devices (1) are adapted for allowing a user (U) of the vehicle (V) to initiate a vehicle starting operation (V_{ST}), wherein the method comprises the steps:
initiating a vehicle shut-off sequence (V_{SO}) after initiation of the vehicle starting operation (V_{ST}), wherein the vehicle shut-off sequence (V_{SO}) is initiated upon receipt of a shut-off request, wherein the vehicle shut-off sequence (V_{SO}) comprises a searching operation for detecting associated key devices (1) within a boundary (B) of the vehicle (V); and
controlling the vehicle (V) to entering a conditional operation mode (M_{CO}) when detecting that no associated key devices (1) are within the boundary (B), wherein the conditional operation mode (M_{CO}) is authorizing a pre-determined vehicle activity preventing a non-operational state of the vehicle (V).

2. The method according to claim 1,
wherein the conditional operation mode (M_{CO}) comprises a charging operation (O_{CH}) of at least one of the one or more associated key devices (1) via a charging port (4) of the vehicle (V), wherein the method further comprises the step: providing a charging current to the charging port (4) after execution of the vehicle shut-off sequence (V_{SO}).

3. The method according to claim 2,
wherein the method further comprises the steps: detecting associated key devices (1) within the boundary (B) of the vehicle (V) and storing the identity of detected associated key devices (1) in a memory unit (3) before initiation of the vehicle starting operation (V_{ST}), and enabling a charging operation (O_{CH}) of at least one of the associated key devices (1) stored in the memory unit (3).

4. The method according to any preceding claim,
wherein the conditional operation mode (M_{CO}) comprises an initiation of a vehicle re-starting operation (V_{RE}) allowing the user (U) to re-start the vehicle (V), wherein the method further comprises the steps: enabling the vehicle re-starting operation (V_{RE}) after execution of the vehicle shut-off sequence (V_{SO}), and re-starting the vehicle (V) by initiating the vehicle starting operation (V_{ST}) upon receiving a starting request.

5. The method according to claim 4,
wherein the vehicle re-starting operation (V_{RE}) is enabling a limited vehicle driving operation, wherein the method further comprises the step: driving the vehicle (V) by the user (U) to a pre-determined destination.

6. The method according to claim 5,
wherein the pre-determined destination comprises one or more destinations associated with one or more users (U) of the vehicle (V), wherein the method further comprises the step: driving the vehicle (V) to one of the one or more destinations associated with the one or more users (U).

7. The method according to claim 5 or 6,
wherein the pre-determined destination comprises one or more locations of one of the one or more associated key devices (1), wherein the method further comprises the step: driving the vehicle (V) to one of the one or more locations of the one or more associated key devices (1).

8. The method according to any of claims 6 or 7,
wherein the one or more destinations associated with the one or more users (U) and/or the one or more locations of the one or more associated key devices (1) are stored in a navigation system (5) of the vehicle (V), wherein the method further comprises the step: providing one or more navigation routes to each of the one or more destinations associated with the one or more users (U) and/or the one or more locations of the one or more associated key devices (1) by the navigation system (5).

9. The method according to claim 8,
wherein the method further comprises the step: initiate a vehicle warning action if the vehicle is deviating from the one or more navigation routes provided by the navigation system (5).

10. The method according to any preceding claim,
wherein the conditional operation mode (M_{CO}) comprises a key sharing request (R_{KS}), wherein the method further comprises the steps: requesting key sharing from one of the one or more associated key devices outside of the boundary (B) of the vehicle (V); upon confirmation of the key sharing request (R_{KS}) enabling the vehicle re-starting operation (V_{RE}) after execution of the vehicle shut-off sequence (V_{SO}); and re-starting the vehicle (V) by initiating the vehicle starting operation (V_{ST}) upon receiving a starting request.

11. The method according to any preceding claim,
wherein the method further comprises the step: associate specific users (U_{S}) with the vehicle (V), and/or associate specific users (U_{S}) with the one or more key devices (1).

12. The method according to claim 11,
wherein the vehicle (V) comprises a user identification sensor (7), wherein the method further comprises the step: detecting and identifying specific associated users (U_{S}) inside the vehicle (V) with the user identification sensor (7), and upon detection and identification of at least one specific associated user (U_{S}) enabling the conditional operation mode (M_{CO}).

13. The method according to any preceding claim,
wherein the method further comprises the steps: enabling the conditional operation mode (M_{CO}) during a limited time period.

14. The method according to any preceding claim,
wherein the vehicle (V) comprises one or more key detection sensors (6) wherein the method further comprises the step: detecting associated key devices (1) within the boundary (B) with the one or more key detection sensors (6).

15. The method according to any preceding claim,
wherein the one or more key detection sensors (6) are wireless communication sensors enabling communication between associated key devices (1) and the vehicle (V).

16. The method according to any preceding claim,
wherein the method further comprises the step: initiating the vehicle starting operation (V_{ST}) upon receiving a starting request when at least one of the one or more associated key devices (1) is detected within the boundary (B).

17. A computer program product comprising instructions which when the program is executed by a vehicle control system (2) cause the vehicle control system (2) to carry out the method of any one of claims 1-16.

18. A computer-readable medium comprising instructions which, when executed by a vehicle control system (2) cause the vehicle control system (2) to carry out the method of any one of claims 1-16.

19. A vehicle control system (2) comprising means for carrying out the method of any one of claims 1-16.

20. A vehicle (V) comprising the vehicle control system (2) according to claim 19 configured for executing the method steps according to claims 1-16.

## Patentansprüche

1. Verfahren zum Betreiben eines Fahrzeugs (V), wobei eine oder mehrere Schlüsselvorrichtungen (1) dem Fahrzeug (V) zugeordnet sind, wobei die eine oder die mehreren zugeordneten Schlüsselvorrichtungen (1) dazu angepasst sind, einen Benutzer (U) des Fahrzeugs (V) dazu zu befähigen, einen Fahrzeugstartbetrieb (V_{ST}) einzuleiten, wobei das Verfahren die folgenden Schritte umfasst:
Einleiten einer Fahrzeugabsperrsequenz (V_{SO}) nach dem Einleiten des Fahrzeugstartbetriebs (V_{ST}), wobei die Fahrzeugabsperrsequenz (V_{SO}) bei Empfangen einer Absperranforderung eingeleitet wird, wobei die Fahrzeugabsperrsequenz (V_{SO}) einen Suchbetrieb zum Detektieren zugeordneter Schlüsselvorrichtungen (1) innerhalb einer Grenze (B) des Fahrzeugs (V) umfasst; und
Steuern des Fahrzeugs (V), um in einen bedingten Betriebsmodus (M_{CO}) einzutreten, wenn detektiert wird, dass sich keine zugeordneten Schlüsselvorrichtungen (1) innerhalb der Grenze (B) befinden, wobei der bedingte Betriebsmodus (M_{CO}) eine vorbestimmte Fahrzeugaktivität genehmigt, die einen nicht betriebsfähigen Zustand des Fahrzeugs (V) verhindert.

2. Verfahren nach Anspruch 1,
wobei der bedingte Betriebsmodus (M_{CO}) einen Ladebetrieb (O_{CH}) mindestens einer der einen oder der mehreren zugeordneten Schlüsselvorrichtungen (1) über einen Ladeanschluss (4) des Fahrzeugs (V) umfasst, wobei das Verfahren ferner den folgenden Schritt umfasst: Bereitstellen eines Ladestroms an den Ladeanschluss (4) nach Ausführen der Fahrzeugabsperrsequenz (V_{SO}).

3. Verfahren nach Anspruch 2,
wobei das Verfahren ferner die folgenden Schritte umfasst: Detektieren zugeordneter Schlüsselvorrichtungen (1) innerhalb der Grenze (B) des Fahrzeugs (V) und Speichern der Identität detektierter zugeordneter Schlüsselvorrichtungen (1) in einer Speichereinheit (3) vor dem Einleiten des Fahrzeugstartbetriebs (V_{ST}) und Ermöglichen eines Ladebetriebs (O_{CH}) mindestens einer der zugeordneten Schlüsselvorrichtungen (1), die in der Speichereinheit (3) gespeichert sind.

4. Verfahren nach einem der vorhergehenden Ansprüche,
wobei der bedingte Betriebsmodus (M_{CO}) eine Einleitung eines Fahrzeugneustartbetriebs (V_{RE}) umfasst, der den Benutzer (U) dazu befähigt, das Fahrzeug (V) erneut zu starten, wobei das Verfahren ferner die folgenden Schritte umfasst: Ermöglichen des Fahrzeugneustartbetriebs (V_{RE}) nach dem Ausführen der Fahrzeugabsperrsequenz (V_{SO}) und erneutes Starten des Fahrzeugs (V) durch Einleiten des Fahrzeugstartbetriebs (V_{ST}) bei Empfangen einer Startanforderung.

5. Verfahren nach Anspruch 4,
wobei der Fahrzeugneustartbetrieb (V_{RE}) einen beschränkten Fahrzeugfahrbetrieb ermöglicht, wobei das Verfahren ferner den folgenden Schritt umfasst: Fahren des Fahrzeugs (V) durch den Benutzer (U) an einen vorbestimmten Zielort.

6. Verfahren nach Anspruch 5,
wobei der vorbestimmte Zielort einen oder mehrere Zielorte umfasst, die einem oder mehreren Benutzern (U) des Fahrzeugs (V) zugeordnet sind, wobei das Verfahren ferner den folgenden Schritt umfasst: Fahren des Fahrzeugs (V) an einen des einen oder der mehreren Zielorte, die dem einen oder den mehreren Benutzern (U) zugeordnet sind.

7. Verfahren nach Anspruch 5 oder 6,
wobei der vorbestimmte Zielort eine oder mehrere Stellen einer der einen oder der mehreren zugeordneten Schlüsselvorrichtungen (1) umfasst, wobei das Verfahren ferner den folgenden Schritt umfasst: Fahren des Fahrzeugs (V) an einen der einen oder der mehreren Stellen der einen oder der mehreren zugeordneten Schlüsselvorrichtungen (1).

8. Verfahren nach einem der Ansprüche 6 oder 7,
wobei der eine oder die mehreren Zielorte, die dem einen oder den mehreren Benutzern (U) und/oder der einen oder den mehreren Stellen der einen oder der mehreren zugeordneten Schlüsselvorrichtungen (1) zugeordnet sind, in einem Navigationssystem (5) des Fahrzeugs (V) gespeichert sind, wobei das Verfahren ferner den folgenden Schritt umfasst: Bereitstellen einer oder mehrerer Navigationsrouten an jeden des einen oder der mehreren Zielorte, die dem einen oder den mehreren Benutzern (U) und/oder der einen oder den mehreren Stellen der einen oder der mehreren zugeordneten Schlüsselvorrichtungen (1) zugeordnet sind, durch das Navigationssystem (5).

9. Verfahren nach Anspruch 8,
wobei das Verfahren ferner den folgenden Schritt umfasst: Einleiten einer Fahrzeugwarnungshandlung, falls das Fahrzeug von der einen oder den mehreren Navigationsrouten abweicht, die durch das Navigationssystem (5) bereitgestellt werden.

10. Verfahren nach einem der vorhergehenden Ansprüche,
wobei der bedingte Betriebsmodus (M_{CO}) eine Schlüsselteilungsanforderung (R_{KS}) umfasst, wobei das Verfahren ferner die folgenden Schritte umfasst: Anfordern einer Schlüsselteilung von einer der einen oder der mehreren zugeordneten Schlüsselvorrichtungen außerhalb der Grenze (B) des Fahrzeugs (V); bei Bestätigen der Schlüsselteilungsanforderung (R_{KS}) Ermöglichen des Fahrzeugneustartbetriebs (V_{RE}) nach dem Ausführen der Fahrzeugabsperrsequenz (V_{SO}); und erneutes Starten des Fahrzeugs (V) durch das Einleiten des Fahrzeugstartbetriebs (V_{ST}) bei Empfangen einer Startanforderung.

11. Verfahren nach einem der vorhergehenden Ansprüche,
wobei das Verfahren ferner den folgenden Schritt umfasst: Zuordnen spezifischer Benutzer (U_{S}) zu dem Fahrzeug (V) und/oder Zuordnen spezifischer Benutzer (U_{S}) zu der einen oder den mehreren Schlüsselvorrichtungen (1).

12. Verfahren nach Anspruch 11,
wobei das Fahrzeug (V) einen Benutzeridentifizierungssensor (7) umfasst, wobei das Verfahren ferner den folgenden Schritt umfasst: Detektieren und Identifizieren spezifischer zugeordneter Benutzer (U_{S}) innerhalb des Fahrzeugs (V) mit dem Benutzeridentifizierungssensor (7) und bei Detektieren und Identifizieren mindestens eines spezifischen zugeordneten Benutzers (U_{S}) Ermöglichen des bedingten Betriebsmodus (M_{CO}).

13. Verfahren nach einem der vorhergehenden Ansprüche,
wobei das Verfahren ferner die folgenden Schritte umfasst: Ermöglichen des bedingten Betriebsmodus (M_{CO}) während eines beschränkten Zeitraums.

14. Verfahren nach einem der vorhergehenden Ansprüche,
wobei das Fahrzeug (V) einen oder mehrere Schlüsseldetektionssensoren (6) umfasst, wobei das Verfahren ferner den folgenden Schritt umfasst: Detektieren zugeordneter Schlüsselvorrichtungen (1) innerhalb der Grenze (B) mit dem einen oder den mehreren Schlüsseldetektionssensoren (6).

15. Verfahren nach einem der vorhergehenden Ansprüche,
wobei der eine oder die mehreren Schlüsseldetektionssensoren (6) drahtlose Kommunikationssensoren sind, die Kommunikation zwischen zugeordneten Schlüsselvorrichtungen (1) und dem Fahrzeug (V) ermöglichen.

16. Verfahren nach einem der vorhergehenden Ansprüche,
wobei das Verfahren ferner den folgenden Schritt umfasst: Einleiten des Fahrzeugstartbetriebs (V_{ST}) bei Empfangen einer Startanforderung, wenn mindestens eine der einen oder der mehreren zugeordneten Schlüsselvorrichtungen (1) innerhalb der Grenze (B) detektiert wird.

17. Computerprogrammprodukt, umfassend Anweisungen, die, wenn das Programm durch ein Fahrzeugsteuersystem (2) ausgeführt wird, das Fahrzeugsteuersystem (2) dazu veranlassen, das Verfahren nach einem der Ansprüche 1-16 durchzuführen.

18. Computerlesbares Medium, umfassend Anweisungen, die, wenn sie durch ein Fahrzeugsteuersystem (2) ausgeführt werden, das Fahrzeugsteuersystem (2) dazu veranlassen, das Verfahren nach einem der Ansprüche 1-16 durchzuführen.

19. Fahrzeugsteuersystem (2), umfassend Mittel zum Durchführen des Verfahrens nach einem der Ansprüche 1-16.

20. Fahrzeug (V), umfassend das Fahrzeugsteuersystem (2) nach Anspruch 19, das zum Ausführen der Verfahrensschritte nach Anspruch 1-16 konfiguriert ist.

## Revendications

1. Procédé de fonctionnement d'un véhicule (V), dans lequel un ou plusieurs dispositifs de clé (1) sont associés au véhicule (V), lesdits un ou plusieurs dispositifs de clé (1) étant adaptés pour permettre à un utilisateur (U) du véhicule (V) de démarrer le véhicule (Vₛₜ), dans lequel le procédé comprend les étapes consistant à :
initier une séquence d'arrêt du véhicule (Vₛₒ) après l'initiation de l'opération de démarrage du véhicule (Vₛₜ), la séquence d'arrêt du véhicule (Vₛₒ) étant lancée à la réception d'une demande d'arrêt, la séquence d'arrêt du véhicule (Vₛₒ) comprenant une opération de recherche pour détecter les dispositifs de clé associés (1) dans une limite (B) du véhicule (V) ; et
commander le véhicule (V) pour entrer dans un mode de fonctionnement conditionnel (M_{co}) lors de la détection qu'aucun dispositif de clé associé (1) ne se trouve dans la limite (B), dans lequel le mode de fonctionnement conditionnel (M_{co}) autorise une activité de véhicule prédéterminée empêchant un état non opérationnel du véhicule (V).

2. Procédé selon la revendication 1,
dans lequel le mode de fonctionnement conditionnel (M_{co}) comprend une opération de charge (O_{CH}) d'au moins un des un ou plusieurs dispositifs de clé associés (1) via un port de charge (4) du véhicule (V), dans lequel le procédé comprend en outre l'étape consistant à : fournir un courant de charge au port de charge (4) après l'exécution de la séquence d'arrêt du véhicule (Vₛₒ).

3. Procédé selon la revendication 2,
dans lequel le procédé comprend en outre les étapes consistant à : détecter des dispositifs de clé associés (1) dans la limite (B) du véhicule (V) et stocker l'identité des dispositifs de clé associés détectés (1) dans une unité de mémoire (3) avant l'initiation de l'opération de démarrage du véhicule (Vₛₜ), et permettre une opération de charge (O_{CH}) d'au moins un des dispositifs de clé associés (1) stockés dans l'unité de mémoire (3).

4. Procédé selon l'une quelconque des revendications précédentes,
dans lequel le mode de fonctionnement conditionnel (M_{co}) comprend une initiation d'une opération de redémarrage du véhicule (V_{RE}) permettant à l'utilisateur (U) de redémarrer le véhicule (V), dans lequel le procédé comprend en outre les étapes consistant à : activer l'opération de redémarrage du véhicule (V_{RE}) après l'exécution de la séquence d'arrêt du véhicule (Vₛₒ), et redémarrer le véhicule (V) en initiant l'opération de démarrage du véhicule (Vₛₜ) lors de la réception d'une demande de démarrage.

5. Procédé selon la revendication 4,
dans lequel l'opération de redémarrage du véhicule (V_{RE}) permet une opération de conduite limitée du véhicule, le procédé comprenant en outre l'étape consistant à : conduire le véhicule (V) par l'utilisateur (U) vers une destination prédéterminée.

6. Procédé selon la revendication 5,
dans lequel la destination prédéterminée comprend une ou plusieurs destinations associées à un ou plusieurs utilisateurs (U) du véhicule (V), dans lequel le procédé comprend en outre l'étape consistant à : conduire le véhicule (V) vers l'une des une ou plusieurs destinations associées aux un ou plusieurs utilisateurs (U).

7. Procédé selon la revendication 5 ou 6,
dans lequel la destination prédéterminée comprend un ou plusieurs emplacements de l'un des un ou plusieurs dispositifs de clé associés (1), dans lequel le procédé comprend en outre l'étape consistant à : conduire le véhicule (V) vers l'un des un ou plusieurs emplacements des un ou plusieurs dispositifs de clé associés (1).

8. Procédé selon l'une quelconque des revendications 6 ou 7, dans lequel les une ou plusieurs destinations associées aux un ou plusieurs utilisateurs (U) et/ou les un ou plusieurs emplacements des un ou plusieurs dispositifs de clé associés (1) sont stockés dans un système de navigation (5) du véhicule (V), le procédé comprenant en outre l'étape consistant à : fournir un ou plusieurs itinéraires de navigation vers chacune des une ou plusieurs destinations associées aux un ou plusieurs utilisateurs (U) et/ou aux un ou plusieurs emplacements des un ou plusieurs dispositifs de clé associés (1) par le système de navigation (5).

9. Procédé selon la revendication 8, dans lequel le procédé comprend en outre l'étape consistant à : initier une action d'avertissement du véhicule si le véhicule s'écarte d'un ou plusieurs itinéraires de navigation fournis par le système de navigation (5).

10. Procédé selon l'une quelconque des revendications précédentes, dans lequel le mode de fonctionnement conditionnel (M_{co}) comprend une demande de partage de clé (R_{KS}), le procédé comprenant en outre les étapes consistant à : demander le partage de clé à l'un des un ou plusieurs dispositifs de clé associés à l'extérieur de la limite (B) du véhicule (V) ; lors de la confirmation de la demande de partage de clé (R_{KS}) activer l'opération de redémarrage du véhicule (V_{RE}) après l'exécution de la séquence d'arrêt du véhicule (Vₛₒ) ; et redémarrer le véhicule (V) en initiant l'opération de démarrage du véhicule (V_{ST}) lors de la réception d'une demande de démarrage.

11. Procédé selon l'une quelconque des revendications précédentes, dans lequel le procédé comprend en outre l'étape consistant à : associer des utilisateurs spécifiques (Uₛ) au véhicule (V), et/ou associer des utilisateurs spécifiques (Uₛ) aux un ou plusieurs dispositifs de clé (1).

12. Procédé selon la revendication 11, dans lequel le véhicule (V) comprend un capteur d'identification d'utilisateur (7), le procédé comprenant en outre l'étape consistant à : détecter et identifier des utilisateurs associés spécifiques (Uₛ) à l'intérieur du véhicule (V) avec le capteur d'identification d'utilisateur (7), et lors de la détection et de l'identification d'au moins un utilisateur associé spécifique (Uₛ) activer le mode de fonctionnement conditionnel (M_{co}).

13. Procédé selon l'une quelconque des revendications précédentes,
dans lequel le procédé comprend en outre l'étape consistant à : activer le mode de fonctionnement conditionnel (M_{co}) pendant une période de temps limitée.

14. Procédé selon l'une quelconque des revendications précédentes,
dans lequel le véhicule (V) comprend un ou plusieurs capteurs de détection de clé (6), le procédé comprenant en outre l'étape consistant à : détecter des dispositifs de clé associés (1) dans la limite (B) avec les un ou plusieurs capteurs de détection de clé (6).

15. Procédé selon l'une quelconque des revendications précédentes,
dans lequel les un ou plusieurs capteurs de détection de clé (6) sont des capteurs de communication sans fil permettant la communication entre des dispositifs de clé associés (1) et le véhicule (V).

16. Procédé selon l'une quelconque des revendications précédentes,
dans lequel le procédé comprend en outre l'étape consistant à : initier l'opération de démarrage du véhicule (V_{ST}) lors de la réception d'une demande de démarrage lorsqu'au moins l'un des un ou plusieurs dispositifs de clé associés (1) est détecté dans la limite (B).

17. Produit de programme informatique comprenant des instructions qui, lorsque le programme est exécuté par un système de commande de véhicule (2), amènent le système de commande de véhicule (2) à mettre en œuvre le procédé selon l'une quelconque des revendications 1 à 16.

18. Support lisible par ordinateur comprenant des instructions qui, lorsqu'elles sont exécutées par un système de commande de véhicule (2), amènent le système de commande de véhicule (2) à mettre en œuvre le procédé selon l'une quelconque des revendications 1 à 16.

19. Système de commande de véhicule (2) comprenant des moyens pour mettre en œuvre le procédé selon l'une quelconque des revendications 1 à 16.

20. Véhicule (V) comprenant le système de commande de véhicule (2) selon la revendication 19 configuré pour exécuter les étapes du procédé selon les revendications 1 à 16.
